# FASCICULE DE BREVET EUROPEEN

(11) **EP 0 538 200 B1**
(45) Date de publication et mention de la délivrance du brevet: **23.07.1997**
(21) Numéro de dépôt: 92810785.3
(22) Date de dépôt: 14.10.1992
(51) Int. Cl.: A61C 5/04

(54) **Appareil d'obturation par le vide de canaux radiculaires dentaires**
Vorrichtung zum Füllen von Zahnwurzelkanälen mit Hilfe eines Vakuums
Apparatus for dental root filling by means of a vacuum

(30) Priorité: 18.10.1991 CH 3065/91
(43) Date de publication de la demande: 21.04.1993
(73) Titulaire: MEDITEC S.A., CH-1024 Ecublens (CH)
(72) Inventeur: Grosrey, Jean, CH-1261 Arzier (CH)
(74) Mandataire: KIRKER & Cie S.A.

(56) Documents cités:
- EP-A- 0 299 919
- DE-A- 4 011 568
- FR-A- 2 338 894

## Description

L'obturation des canaux dentaires s'effectue actuellement au "lentulo" ou par l'emploi de cônes en guttapercha. Ces deux méthodes donnent satisfaction mais obturent de façon aléatoire les canaux latéraux, et en tout cas pas les canalicules. Des procédés par injection de gutta-percha chaude font, depuis quelques années, leur apparition sur le marché américain, mais les résultats ne semblent pas encore probants. Le procédé est très difficile à appliquer dans le cas de canaux traités par voie hydraulique comme décrit dans le brevet EP-A-0299919.

Dans ce dernier brevet qui expose les caractéristiques du préambule de la revendication 1 il est décrit un procédé d'obturation sous vide qui a montré quelques lacunes. Le frottement du piston de la seringue doit être compensé par une légère pression sur ce dernier, ce qui risque de causer des dépassements apicaux. De la pâte d'obturation passe souvent dans le tube d'aspiration reliant l'embout à la pompe à vide.

De plus dans ce brevet on utilise le même embout pour réaliser le nettoyage, le séchage et l'obturation de la cavité pulpaire d'une dent. De ce fait l'embout ne peut pas présenter les caractéristiques optimales pour chacune de ces opérations mais sa réalisation représente un compromis qui est particulièrement mauvais pour l'opération d'obturation.

De plus dans l'équipement décrit dans ce document l'embout unique doit entre chaque opération subir des branchements manuels différents, ce qui rend l'appareil difficile à utiliser.

L'obturation par le vide de dents dévitalisées a déjà été proposée en 1958 (Prof. Dr.med.Dr.med.dent. Gustav Korkhaus und Dr.med.dent. Rudolf Alfter : Die Vakuumwurzelbehandlung, Forschungsberichte des Wirtschaft- und Verkehrsministeriums Nordrhein-Westfalen; Westdeutscher Verlag, Köln un Opladen, 1958). Toutefois le matériel utilisé à l'époque était lourd et peu performant; mal adapté à la technique dentaire. La vanne à trois voies n'était pas facile à utiliser, les volumes morts étaient très importants.
La présente invention vise à fournir un dispositif de séchage et d'obturation de canaux radiculaires par le vide qui soit efficace et exempt des inconvénients des dispositifs antérieurement connus. Elle a pour objet un appareil d'obturation de canaux radiculaires dentaires, conforme à la revendication 1.
Les dessins annexés représentent, à titre d'exemple, une forme d'exécution de l'appareil objet de l'invention.
Fig. 1 est un schéma d'ensemble d'une forme d'exécution de l'appareil selon l'invention.
Fig. 2 est une vue en coupe schématique d'un embout de séchage de canaux radiculaires, appartenant à cette forme d'exécution selon fig. 1.
Fig. 3 est une vue en coupe analogue à la fig. 2 mais montrant en coupe un embout d'obturation appartenant aussi à cette forme d'exécution de l'appareil.

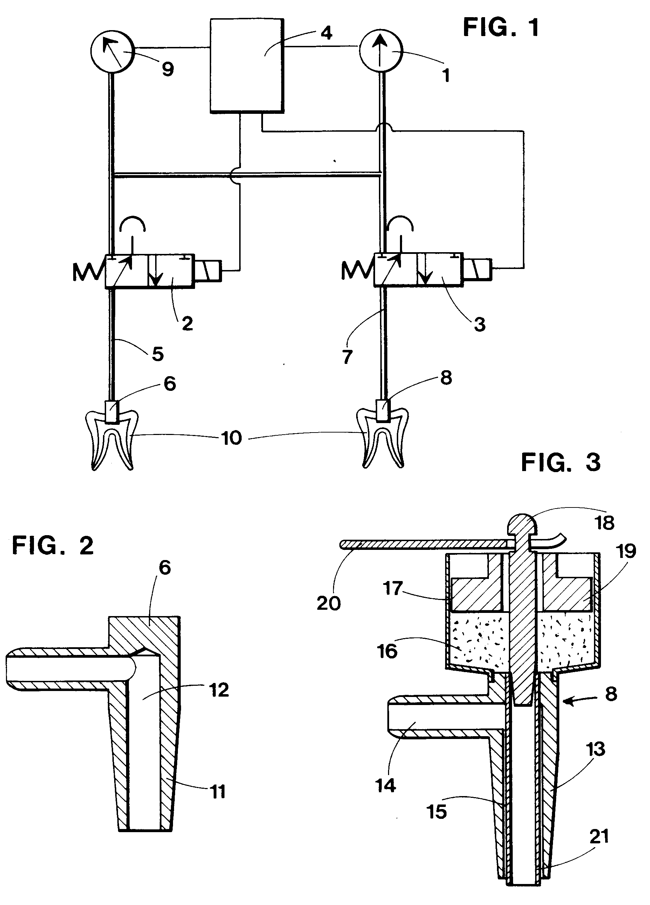

Sur le schéma d'ensemble (fig. 1), on a représenté une pompe à vide à membrane à quatre étages 1, une électrovanne à trois voies 2 pour le séchage, une électrovanne à trois voies 3 pour l'obturation, une commande électronique 4 de l'ensemble. Le tout est logé dans un boîtier non représenté sur le schéma. L'électrovanne de séchage 2 est raccordée par un tube 5 à un embout de séchage 6, et l'électrovanne 3 pour l'obturation est raccordée par un tube 7 à un embout d'obturation 8.

Un pressostat 9 permet de contrôler la qualité du vide, afin de détecter toutes fuites éventuelles, en particulier du raccord par cône de l'embout à la dent traitée.

Par la commande électronique 4 le praticien peut choisir d'envoyer le vide, soit par l'embout de séchage 6 pour effectuer le séchage de la dent après le nettoyage du canal, soit par l'embout 8 après le séchage pour l'obturation. Il est prévu également une position de repos. Cette commande 4 comprend également une alarme non représentée déclenchée par le pressostat, si un vide insuffisant a été détecté par ce dernier.

L'embout de séchage 6 (figure 2) n'est rien d'autre qu'un raccord entre le tube d'amenée du vide 5 et la dent à traiter 10. Ce raccord est caractérisé par un cône 11 de 4° de conicité pour assurer l'étanchéité et être facilement branché dans l'orifice fraisé de la dent, avec une fraise de forme, sur la face occlusale de la dent. De plus, le conduit d'amenée du vide 12 est suffisamment grand, pour ne pas occasionner une perte de charge trop importante.

En effet, pendant la phase de séchage, l'eau contenue dans le ou les canaux traités est vaporisée par aspiration et un important flux de vapeur va passer à travers l'embout.

L'embout d'obturation 8, dont une coupe est représentée sur la figure 3, comprend un cône 13 identique au cône 11 de l'embout de séchage 6. Le vide se fait dans la dent par un conduit d'aspiration 14 et un canal annulaire 15. La pâte d'obturation 16 a été introduite dans un réservoir 17 après qu'une tige de fermeture 18 ait été mise en place. Un petit piston libre 19, est posé sur la pâte d'obturation afin que le réservoir se vide de façon homogène, quand elle est aspirée par le vide.

Pour procéder à l'obturation du ou des canaux traités, le praticien presse légèrement un petit levier de commande 20 qui soulève la tige de fermeture 18, ouvrant ainsi l'extrémité d'un tube 21 voisine du réservoir 17, permettant ainsi à la pâte d'être aspirée dans la dent au travers du dit tube. La pâte va maintenant pénétrer dans tous les interstices du système radiculaire, et même dans les canalicules si ces derniers ont été nettoyés par cavitation, (ce qui est le cas quand le traitement a été effectué par le procédé décrit dans le brevet US 4.993.947).

Il est évident que la pâte va être aspirée également dans le canal 15 menant au conduit d'aspiration 14 relié à la pompe à vide. Pour parer à cet inconvénient, on donne à ce passage des dimensions très précises. En effet si le passage est trop étroit, la perte de charge occasionnée par l'écoulement de la pâte est très grande, et cette dernière va mettre plusieurs minutes pour atteindre le conduit d'aspiration 14. Réciproquement, à la qualité de vide nécessaire (environ 10 hPa), la perte de charge, créée par le passage des molécules d'air enfermées dans le volume du système radiculaire, est également très importante. Le volume de gaz à éliminer est faible (moins d'un demi-centimètre cube) puisque le système a été séché au préalable. L'expérience a montré qu'une section de 0.5 mm² pour une longueur de 9 mm est un compromis acceptable. Le vide de 10 hPa est atteint, pour un système radiculaire normal, au bout d'une minute. La pâte, de fluidité habituelle en dentisterie, mettra une minute pour atteindre le conduit 14, ce qui est largement suffisant pour commuter l'électrovanne d'obturation 3. On a choisi la construction concentrique de 13 et 21, qui est la mieux adaptée. Il va sans dire que, dans une variante, le conduit annulaire 15 peut être remplacé par un petit tube placé à côté du conduit d'amenée de la pâte 21.

Il est avantageux de prévoir que, au moins la partie conique 13 de l'embout soit transparente, pour permettre au dentiste d'observer l'ascension lente de la pâte dans le canal 15 et d'arrêter au bon moment la sortie de la pâte du réservoir 17 et son arrivée dans la cavité dentaire.

La pompe à vide 1, est de préférence, comme indiqué plus haut, une pompe à membrane à quatre étages, permettant d'obtenir un vide de 10 hPa. Vu les faibles volumes mis en jeu, le débit peut être très faible. Les dimensions de telles pompes sont aujourd'hui très acceptables : 700 cc pour un poids d'un kilogramme.

Un petit chauffage de 1 à 2 watts (non représenté sur la figure 3) peut entourer le réservoir 17 et permettre de modifier à volonté la fluidité du produit d'obturation utilisé. Ce petit chauffage est très commode en particulier pour obturer les canaux avec de la gutta-percha prévue à cet effet.

## Revendications

1. Appareil d'obturation de la cavité pulpaire et des canaux radiculaires dentaires, après nettoyage de ceux-ci comprenant un embout d'obturation (8) prévu pour s'adapter de façon étanche dans un orifice fraisé d'une dent aboutissant à la cavité dentaire et une pompe à vide (1) destinée à être connectée à un premier canal d'aspiration (14, 15) de l'embout d'obturation (8), l'embout d'obturation (8) comportant encore un second canal (21) de passage d'une matière (16) d'obturation dont la section est plusieurs fois plus grande que celle du canal d'aspiration (14), caractérisé par le fait qu'il comporte encore un embout de séchage (6) prévu pour s'adapter de façon étanche dans ledit orifice fraisé d'une dent; par le fait que la pompe à vide est reliée alternativement au conduit d'aspiration (14) de l'embout d'obturation (8) et à un conduit d'aspiration (12) de l'embout de séchage (6) par l'intermédiaire de vannes à trois voies (3) respectivement (2) toutes deux commandées par une commande électrique (4); par le fait que l'embout d'obturation comporte un réservoir (17) de pâte (16) d'obturation obturé par un piston libre (19); et par le fait que cet embout (8) comporte encore un obturateur (18), actionné par un moyen de commande manuel (20), séparant en position normale fermée le réservoir (17) dudit second canal (21) d'introduction de la pâte (16) dans la cavité pulpaire, le tout agencé de telle sorte que lorsque le niveau de la matière d'obturation dans la cavité dentaire atteint l'extrémité inférieure de ce canal d'aspiration (15), ladite matière d'obturation soit aspirée alors dans ce canal et chemine beaucoup plus lentement à son intérieur que dans le canal (21), sous l'effet de la dépression dans la cavité dentaire, mais suffisamment grande pour permettre de faire le vide nécessaire dans un temps acceptable, pour assurer un remplissage correct de cette cavité par cette matière.

2. Appareil selon la revendication 1, caractérisé en ce que la section de passage du premier canal (15) est de l'ordre de dix fois plus petite que la section de passage du second canal.

3. Appareil selon la revendication 1 ou 2, caractérisé en ce que le second canal (21) est cylindrique et coaxial avec l'embout, qui est conique (13), le premier canal (15) étant de section annulaire entourant concentriquement le second canal (21).

4. Appareil selon la revendication 1, caractérisé en ce que la section de passage du premier canal (15) susdit est de l'ordre de 0,5 mm², pour une longueur de ce canal d'approximativement 9 mm.

5. Appareil selon la revendication 1 ou 2, caractérisé en ce que la paroi du premier canal (15) est transparente, sur au moins une partie de sa longueur, à partir de son extrémité prévue pour être dans la cavité dentaire lorsque l'embout est adapté sur une dent, pour rendre visible à l'opérateur le cheminement de la matière d'obturation dans ce premier canal (15) et indiquer ainsi à l'opérateur lorsqu'il faut arrêter la sortie de cette matière hors dudit réservoir (17).

## Claims

1. An apparatus for filling pulp cavities and root canals of teeth, after their cleaning, including a filling nozzle (8) adapting sealingly inside an opening made with a burr in a tooth and extending to the tooth cavity and a vacuum pump (1) designed for connection to a first suction channel (14, 15) of the filling nozzle (8), this filling nozzle (8) further including a second channel (21) for the supply of a filling material (16), having a cross-section several times greater than that of the suction channel (14), characterized in that it further includes a drying nozzle (6) adapting sealingly inside said opening made with a burr in a tooth; in that the vacuum pump is connected alternately to the suction conduit (14) of the filling nozzle (8) and to a suction conduit (12) of the drying nozzle (6) by means of a three-way valve (3), both being controlled by an electric control device (4); in that the filling nozzle includes a reservoir (17) of filling material (16) closed by a free piston (19); and in that this nozzle (8) further includes an obturator (18) activated by a manual control means (20) separating, in the normal closed position, the reservoir (17) from said second channel (21), for introducing filling material (16) into the pulp cavity, the apparatus being designed in such a manner that when the level of the filling material in the tooth cavity reaches the lower end of this suction channel (15), said filling material then is sucked into this channel and travels much more slowly therein than in the channel (21), under the effect of the depression in the tooth cavity, but sufficiently fast to enable the obtention of the vacuum required in an acceptable time interval, for ensuring a proper filling of said cavity by said material.

2. An apparatus according to claim 1, characterized in that the cross-section of the lumen of the first channel (15) is approximately ten times smaller than the cross-section of the lumen of the second channel.

3. An apparatus according to claim 1 or 2, characterized in that the second channel (21) is cylindrical and coaxial with respect to the nozzle (13) which is conical, the first channel (15) having an annular cross-section surrounding concentrically the second channel (21).

4. An apparatus according to claim 1, characterized in that the cross-section of the lumen of said first channel (15) is in the order of 0.5 mm² for a channel of a length of approximately 9 mm.

5. An apparatus according to claim 1 or 2, characterized in that the wall of the first channel (15) is transparent, on at least a part of its length, from its end designed for introduction into the tooth cavity when the nozzle is adapted on a tooth, to make visible to the operator the flow of filling material in this first channel (15) and thus inform him when he should stop the outflow of this material from said reservoir (17).

## Patentansprüche

1. Vorrichtung zum Füllen der gereinigten Zahnhöhle und Zahnwurzelkanäle mit einer dicht in ein in die Zahnhöhle mündendes Zahnbohrloch einzupassenden Verschlusstülle (8) und mit einer an einen ersten Ansaugkanal (14, 15) der Verschlusstülle (8) anzuschliessenden Vakuumpumpe (1), wobei die Verschlusstülle (8) noch einen zweiten Kanal (21) für den Durchlass einer Füllmasse (16) hat, dessen Querschnitt mehrere Male grösser als der des Ansaugkanals (14) ist, dadurch gekennzeichnet, dass sie noch eine dicht in das benannte Zahnbohrloch einzupassende Trocknungstülle (6) hat; dadurch, dass die Vakuumpumpe über beide durch einen elektrischen Antrieb (4) betätigte Dreiwegventile (3) bzw. (2) abwechselnd an den Ansaugkanal (14) der Verschlusstülle (8) und an einen Ansaugkanal (12) der Trocknungstülle (6) angeschlossen wird; dadurch, dass die Verschlusstülle ein Vorratsgefäss (17) mit Füllmasse (16) hat, das durch einen leichtgängigen Stempel (19) verschlossen ist; und dadurch, dass diese Tülle (8) noch eine durch einen Handantrieb (20) betätigte Verschlussvorrichtung (18) hat, die in der normalen, geschlossenen Stellung das Vorratsgefäss (17) von dem benannten zweiten Kanal (21) für die Einführung der Masse (16) in die Zahnhöhle trennt, wobei das ganze so eingerichtet ist, dass, wenn das Niveau der Füllmasse in der Zahnhöhle das untere Ende dieses Ansaugkanals (15) erreicht hat, die benannte Füllmasse dann in diesen Kanal gesaugt wird und darin unter der Wirkung des Unterdrucks in der Zahnhöhle viel langsamer wandert als in dem Kanal (21), jedoch rasch genug, um innerhalb eines akzeptablen Zeitraumes das nötige Vakuum herzustellen und eine kunstgerechte Füllung dieser Höhle durch diese Masse sicherzustellen.

2. Vorrichtung gemäss Anspruch 1, dadurch gekennzeichnet, dass der Durchlassquerschnitt des ersten Kanals (15) grössenordnungsmässig zehnmal kleiner als der Durchlassquerschnitt des zweiten Kanals ist.

3. Vorrichtung gemäss Anspruch 1 oder 2, dadurch gekennzeichnet, dass der zweite Kanal (21) zylindrisch und koaxial mit der Tülle ist, die selbst konisch (13) ist, wobei der erste Kanal (15) einen ringförmigen Querschnitt hat, der den zweiten Kanal (21) konzentrisch umgibt.

4. Vorrichtung gemäss Anspruch 1, dadurch gekennzeichnet, dass der Durchlassquerschnitt des obengenannten ersten Kanals (15) in der Grössenordnung von 0,5 mm² ist, wobei die Länge dieses Kanals etwa 9 mm beträgt.

5. Vorrichtung gemäss Anspruch 1 oder 2, dadurch gekennzeichnet, dass die Wandung des ersten Kanals (15) zumindest über einen Teil seiner Länge durchsichtig ist, und zwar beginnend an dem Ende, das dafür vorgesehen ist, in der Zahnhöhle zu stecken, wenn die Tülle auf einen Zahn aufgepasst wird, um die Wanderung der Füllmasse in diesem ersten Kanal (15) für den Behandelnden sichtbar zu machen und ihm somit anzuzeigen, wann der Austritt dieser Masse aus dem benannten Vorratsgefäss (17) unterbrochen werden muss.
